# EUROPEAN PATENT SPECIFICATION

(11) **EP 3 920 387 B1**
(45) Date of publication and mention of the grant of the patent: **22.04.2026**
(21) Application number: 19913656.5
(22) Date of filing: 29.11.2019
(51) Int. Cl.: H02K 41/03, H02K 3/26

(54) **PLANAR MOTOR DISPLACEMENT DEVICE**
PLANARE MOTORVERSCHIEBUNGSVORRICHTUNG
DISPOSITIF DE DÉPLACEMENT À MOTEUR PLAN

(30) Priority: 29.01.2019 CN 201910088057
(43) Date of publication of application: 08.12.2021
(73) Proprietor: Shanghai Yinguan Semiconductor Technology Co., Ltd, Shanghai 200135 (CN)
(72) Inventor: DING, Chenyang, Foshan, Guangdong 528222 (CN); ZHANG, Guoqi, Foshan, Guangdong 528222 (CN); LI, Hanxiong, Foshan, Guangdong 528222 (CN)
(74) Representative: Novagraaf International SA
(86) International application number: PCT/CN2019/121899
(87) International publication number: WO 2020/155830

(56) References cited:
- CN-A- 101 610 022
- CN-A- 103 441 708
- CN-A- 104 901 586
- CN-A- 104 901 586
- CN-U- 205 178 689
- CN-U- 207 251 339
- US-A- 3 512 251
- US-A1- 2018 212 505

## Description

### TECHNICAL FIELD

The present invention relates to the field of precision motion systems, and in particular, to a planar motor displacement device.

### BACKGROUND OF THE INVENTION

Patent document 1 describes a displacement device, with a coil array on a mover and a magnet array on a stator. The mover can move in at least two directions (X and Y) relative to the stator. Each coil is a hollow structure, and the arrangement of the coils does not make up for the hollow structure, thus reducing the space ratio of the conductor material, thereby limiting the increase in the motor power.

Patent Document 2 describes a frame design of a displacement device, where the coil array of the mover includes at least one double-layer coil structure, each double-layer coil structure integrates at least two sets of three-phase coils linearly extending in the direction X and two sets of three-phase coils linearly extending in the direction Y, causing the space occupied by the coil array to be filled with conductor material, which increases the space ratio of the conductor material, thereby increasing the motor power under the same current condition. However, the three-phase coil on each double-layer coil structure has only one turn, meaning that the current through each coil is relatively large, which raises the requirement on the current amplifier and increases the cost.

CN104901586A discloses magnet steel unit comprising square first magnet steel and four square second magnet steels around the first magnet steel. Four limits of described first magnet steel and/or the second magnet steel are by being provided with the seamless connection of the 3rd magnet steel of the rectangular shape of chamfering.

US2018212505A1 discloses a displacement device including a stage and a stator, wherein the stator is shaped to provide a working region and the stator includes: a plurality of magnet blocks of the first kind, each magnet block of the first kind including a plurality of first magnets generally linearly elongated in the X-direction, and a plurality of magnet blocks of the second kind, each magnet block of the second kind including a plurality of second magnets generally linearly elongated in the Y-direction.

US3512251A discloses a method for manufacturing a disk-like rotor having multi-layer conductors, in which said rotor conductors are formed by means of a metal powder method. Insulator films between the conductors are printed with an insulating resin in another portion than the portions necessary for connecting upper layer conductors to lower layer conductors. The upper layer conductors are formed on the insulating layers therefor by means of the metal powder method, whereby when the upper layer conductors are formed by means of non-electroplating, the electrical connecting portions between the upper and lower layer conductors are simultaneously metallized and thereby the electrical connection between the upper and lower layer conductors is performed without requiring time and trouble.

CN207251339U discloses a stator assembly for an electric machine including at least one printed layer group. The printed layer group includes: two printed layers, each layer of the two printed layers comprising multiple sets of conductive patterns; a first core board, wherein the two printed layers are printed on both sides of the first core board; the first core board is provided with a plurality of connection holes filled with a dielectric; and the multiple groups of conductive patterns of each layer of the two layers of the printed layers are electrically connected to the multiple groups of conductive patterns of another layer through the connection holes so that each group of the conductive patterns forms a continuous line of conductive coils.

CN205178689U discloses a double-layer PCB board coil winding arrangement of a disk type brushless motor. The arrangement comprises a PCB board provided with upper and lower routing layer and some groups of via holes, the upper and lower routing layer are provided with some groups of wires that are arranged at intervals, each group of wires forms a half coil on the upper trace layer or the lower trace layer, and the wires on the upper and lower trace layers are connected to each other through via holes to form a complete coil, and each group of wires on the upper and lower trace layers respectively has a first end and a tail end of the coil.

Patent document 1: US7372548

Patent document 2: CN201711477956.0

### SUMMARY OF THE INVENTION

In order to solve the above problem, the present invention discloses a planar motor displacement device, which at least includes a stator and a mover, the stator includes at least a magnet array, which extends on a first plane parallel to a direction X and a direction Y to form a working area, the mover includes at least a coil array, the coil array of the mover is arranged on a second plane parallel to the first plane and interacts with the magnet array, enabling the mover to produce displacements in at least two directions within the working area; the direction X is approximately perpendicular to the direction Y; the magnet array at least includes a S magnet and an N magnet, the S magnet and the N magnet are arranged periodically in the direction X and the direction Y; the coil array at least includes an X coil array and a Y coil array; the X coil array at least includes a set of X three-phase coils, the set of X three-phase coils at least includes three X coils of a same size; the Y coil array at least includes a set of Y three-phase coils, the set of Y three-phase coils at least includes three Y coils of a same size; the size of the X coil in the direction Y is greater than in the direction X, the size of the Y coil in the direction X is greater than in the direction Y;
Each of the X coils is arranged on a plurality of first double-layer structures that have a same XY position and are arranged adjacently along a direction Z, each of the X coils is wound at least two turns on each first double-layer structure, and each turn of the X coil is arranged on a first double-layer structure of the plurality of first double-layer structures, the projection of each turn of the X coil is rectangular, of which the two long sides and one short side are arranged on the first layer of said first double-layer structure and the other short side is arranged on the second layer of said first double-layer structure, conductors of each turn arranged on the first layer and the second layer respectively are connected in series by a conduction path between the two layers, so that a current flows to and fro at least once between the two layers of each first double-layer structure; each of the Y coils is arranged on a plurality of second double-layer structures that have a same XY position and are arranged adjacently along a direction Z, each of the Y coils is wound at least two turns on each second double-layer structure, and each turn of the Y coil is arranged on a second double-layer structure of the plurality of second double-layer structures, the projection of each turn of the Y coil is roughly rectangular, of which the two long sides and one short side are arranged on the first layer of said second double-layer structure and the other short side is arranged on the second layer of said second double-layer structure, conductors of each turn arranged on the first layer and the second layer respectively are connected in series by a conduction path between the two layers, so that a current flows to and fro at least once between the two layers of each second double-layer structure; the upper and lower layers of each double-layer structure of the X coil or the Y coil extend respectively on a plane substantially perpendicular to the direction Z; the direction Z is substantially perpendicular to the first plane.

In the planar motor displacement device of the present invention, preferably, the S magnet and the N magnet are arranged in rows and columns on the first plane, and are arranged alternately in each column and in each row, a spatial period λx of the formed magnetic field in the direction X is equal to a distance between two adjacent homopolar magnets in the direction X, and the spatial period λy in the direction Y is equal to the distance between two adjacent homopolar magnets in the direction Y.

In the planar motor displacement device of the present invention, preferably, a plurality of S the magnets and the N magnets linearly extend along the direction X, and are arranged one by one alternately in the direction Y to form a first magnet block, a spatial period λy of the formed magnetic field in the direction Y is twice a distance in the direction Y between the S magnet and the adjacent N magnet in the first magnet block;

A plurality of the S magnets and the N magnets linearly extend along the direction Y, and are arranged one by one alternately in the direction X to form a second magnet block, the spatial period λx of the formed magnetic field in the direction X is twice the distance in the direction X between the S magnet and the adjacent N magnet in the second magnet block;

The first magnet block and the second magnet block are arranged in rows and columns on the first plane, and are arranged alternately in each column and in each row.

In the planar motor displacement device of the present invention, preferably, the X coil array at least includes two sets of X three-phase coils of a same size, and the Y coil array at least includes two sets of Y three-phase coils of a same size;

The upper layer of the n^{-th} double-layer structure from the top to the bottom of all of the two sets of X three-phase coils, and the upper layer of the n^{-th} double-layer structure from the top to the bottom of all of the two sets of Y three-phase coils, are arranged in a same plane substantially parallel to the second plane, where n=1, 2, 3, ...;

The lower layer of the n^{-th} double-layer structure from the top to the bottom of all of the two sets of X three-phase coils, and the lower layer of the n^{-th} double-layer structure from the top to the bottom of all of the two sets of Y three-phase coils, are arranged in a same plane substantially parallel to the second plane, where n=1, 2, 3, ...;

The distance dₓₓ between center positions of the two sets of X three-phase coils in the direction X is λx/3, and the distance d_{yy} between the center positions of the two sets of Y three-phase coils in the direction Y is λy/3.

In the planar motor displacement device of the present invention, preferably, the magnet array further includes an H magnet, the H magnet is located between the S magnet and the N magnet, and a magnetization direction of the H magnet is pointing from the S magnet to the N magnet.

In the planar motor displacement device of the present invention, preferably, a top double-layer structure or a middle double-layer structure of the X coil at least includes a first turn of X upper conductor, a second turn of X upper conductor, a first turn of X lower conductor, and a second turn of X lower conductor;

The first turn of X upper conductor and the second turn of X upper conductor are U-shaped at right angles respectively, and the first turn of X upper conductor is arranged outside the second turn of X upper conductor;

The first turn of X lower conductor and the second turn of X lower conductor are rectilinear respectively, and the first turn of X lower conductor is arranged inside the second turn of X lower conductor;

Projections of the first turn of X upper conductor and the first turn of X lower conductor on a plane X-Y are roughly rectangular, and the projections of the second turn of X upper conductor and the second turn of X lower conductor on the plane X-Y are roughly rectangular;

A current inflow end of the first turn of X upper conductor is brought into conduction with a current inflow point of the double-layer structure, a current outflow end of the first turn of X upper conductor is brought into conduction with the current inflow end of the first turn of X lower conductor, the current outflow end of the first turn of X lower conductor is brought into conduction with the current inflow end of the second turn of X upper conductor, the current outflow end of the second turn of X upper conductor is brought into conduction with the current inflow end of the second turn of X lower conductor, the current outflow end of the second turn of X lower conductor is brought into conduction with the current inflow point of the next double-layer structure, wherein the current inflow point of the top double-layer structure is the current inflow point of the entire X coil.

In the planar motor displacement device of the present invention, preferably, a bottom double-layer structure of the X coil at least includes a first turn of X upper conductor, a second turn of X upper conductor and a first turn of X lower conductor;

The first turn of X upper conductor and the second turn of X upper conductor are U-shaped at right angles respectively, and the first turn of X upper conductor is arranged outside the second turn of X upper conductor;

The first turn of X lower conductor is rectilinear, and projections of the first turn of X upper conductor and the first turn of X lower conductor on a plane X-Y are roughly rectangular;

A current inflow end of the first turn of X upper conductor is brought into conduction with a current inflow point of the double-layer structure, a current outflow end of the first turn of X upper conductor is brought into conduction with the current inflow end of the first turn of X lower conductor, the current outflow end of the first turn of X lower conductor is brought into conduction with the current inflow end of the second turn of X upper conductor, the current outflow end of the second turn of X upper conductor is brought into conduction with a current outflow point of the entire X coil.

In the planar motor displacement device of the present invention, preferably, a top double-layer structure or a middle double-layer structure of the Y coil at least includes an upper drain conductor, a first turn of Y upper conductor, a second turn of Y upper conductor, a lower drain conductor, a first turn of Y lower conductor and a second turn of Y lower conductor;

The upper drain conductor, the lower drain conductor, the first turn of Y upper conductor and the second turn of Y upper conductor are rectilinear respectively, and the first turn of Y upper conductor is arranged inside the second turn of Y upper conductor;

The first turn of Y lower conductor and the second turn of the Y lower conductor are U-shaped at right angles respectively, and the first turn of Y lower conductor is arranged outside the second turn of Y lower conductor;

Projections of the upper drain conductor, the first turn of Y upper conductor and the first turn of Y lower conductor on a plane X-Y are roughly rectangular, and the projections of the second turn of Y upper conductor and the second turn of Y lower conductor on the plane X-Y are roughly rectangular;

One end of the upper drain conductor is connected to a current inflow point of the double-layer structure, the other end of the upper drain conductor is brought into conduction with a current inflow end of the first turn of Y lower conductor, a current outflow end of the first turn of Y lower conductor is brought into conduction with the current inflow end of the first turn of Y upper conductor, the current outflow end of the first turn of Y upper conductor is brought into conduction with the current inflow end of the second turn of Y lower conductor, the current outflow end of the second turn of Y lower conductor is brought into conduction with the current inflow end of the second turn of Y upper conductor, the current outflow end of the second turn of Y upper conductor is brought into conduction with the current inflow end of the lower drain conductor, and the current outflow end of the lower drain conductor is brought into conduction with the current inflow end of the next double-layer structure, wherein the current inflow point of the top double-layer structure is the current inflow point of the entire Y coil.

In the planar motor displacement device of the present invention, preferably, a bottom double-layer structure of the Y coil at least includes an upper drain conductor, a first turn of Y upper conductor, a first turn of Y lower conductor and a second turn of Y lower conductor,

The upper drain conductor and the first turn of Y upper conductor are rectilinear respectively,

The first turn of Y lower conductor and the second turn of Y lower conductor are U-shaped at right angles respectively, and the first turn of Y lower conductor is arranged outside the second turn of Y lower conductor,

Projections of the upper drain conductor, the first turn of Y upper conductor and the first turn of Y lower conductor on a plane X-Y are roughly rectangular,

One end of the upper drain conductor is connected to a current inflow point of the double-layer structure, the other end of the upper drain conductor is brought into conduction with a current inflow end of the first turn of Y lower conductor, a current outflow end of the first turn of Y lower conductor is brought into conduction with the current inflow end of the first turn of Y upper conductor, the current outflow end of the first turn of Y upper conductor is brought into conduction with the current inflow end of the second turn of Y lower conductor, the current outflow end of the second turn of Y lower conductor is brought into conduction with a current outflow point of the entire Y coil.

In the planar motor displacement device of the present invention, preferably, the conductors in different conductor layers of the coil array are electrically connected through vias in a printed circuit board, the current outflow point of the coil is a through hole in the printed circuit board, which hole penetrates the top double-layer structure of the coil to the bottom double-layer structure.

The present invention effectively reduces the current per turn by increasing the number of turns of the coil, thereby reducing the requirement on the current amplifier and further controlling the cost.

### BRIEF DESCRIPTION OF THE DRAWINGS

FIG. 1 is a schematic plan view of the mover and stator magnet array of the displacement device of the present invention.
FIG. 2A is a schematic diagram of the winding method of the top double-layer structure of the X coil.
FIG. 2B is a schematic diagram of the winding method of the middle double-layer structure of the X coil.
FIG. 2C is a schematic diagram of the winding method of the bottom double-layer structure of the X coil.
FIG. 3A is a schematic diagram of the winding method of the top double-layer structure of the Y coil.
FIG. 3B is a schematic diagram of the winding method of the middle double-layer structure of the Y coil.
FIG. 3C is a schematic diagram of the winding method of the bottom double-layer structure of the Y coil.
FIG. 4 is a schematic diagram of a variation of the stator magnet array of the displacement device of the present invention.

### DETAILED DESCRIPTION OF THE INVENTION

In order to make the objectives, technical solutions, and advantages of the present invention clearer, the following will fully and clearly describe the technical solutions in the embodiments of the present invention with reference to the drawings in the embodiments of the present invention. It should be understood that the specific embodiments described here are only used to explain, not to limit, the present invention. The described embodiments are only a part, not all, of the embodiments of the present invention.

In the description of the present invention, it should be noted that the orientation or positional relationship indicated by such terms as "upper", "lower", "vertical", "horizontal", etc. are based on the orientation or positional relationship shown in the drawings, only for the convenience of describing the present invention and simplifying the description, instead of indicating or implying that the device or element referred to must have a specific orientation and be constructed and operated in a specific orientation, therefore shall not be construed as limiting the present invention. Besides, the terms "first" and "second" are only used for descriptive purposes, and shall not be construed as indicating or implying relative importance.

In addition, many specific details of the present invention are described below, such as the structure, materials, dimensions, processing technology and techniques of the device, in order to understand the present invention more clearly. However, as those skilled in the art can understand, the present invention can be implemented not by these specific details. Unless specifically pointed out in the following text, every part of the device can be composed of materials known to those skilled in the art, or materials with similar functions developed in the future.

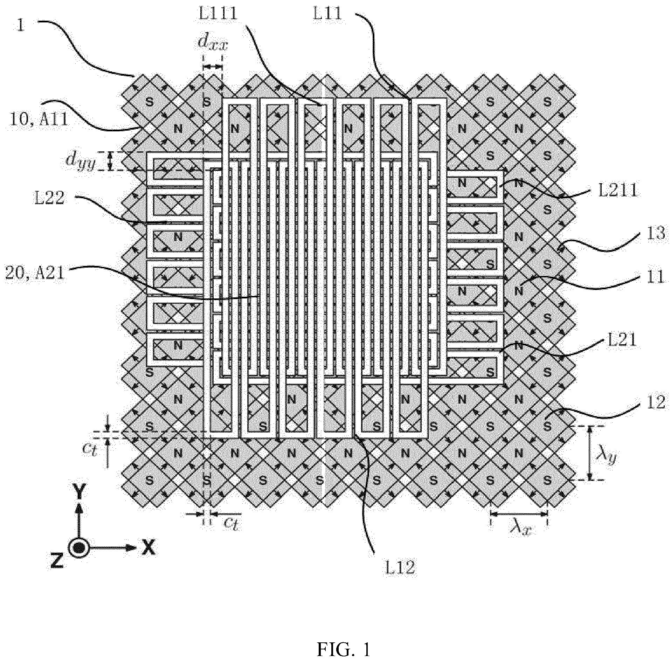

FIG. 1 is a schematic plan view of the mover and stator magnet array of the displacement device according to an embodiment of the present invention. As shown in FIG. 1, the displacement device 1 of the present invention has a stator 10 and a mover 20, the stator 10 includes at least a magnet array A11, which extends on a first plane parallel to the direction X and the direction Y to form a working area, the mover 20 includes at least a coil array A21, the coil array A21 of the mover is arranged on a second plane parallel to the first plane and interacts with the magnet array A11, so that the mover 20 can produce displacements in at least two directions within the range of the working area, wherein, the direction X and the direction Y are approximately perpendicular to each other.

The magnet array A11 includes an N magnet 11 and a S magnet 12. The N magnet 11 and S magnet 12 are arranged in rows and columns on the first plane (that is, plane X-Y ), and are arranged alternately in each column and in each row; and the spatial period λx of the formed magnetic field in the direction X is equal to the distance between two adjacent homopolar magnets in the direction X, the spatial period λy in the direction Y is equal to the distance between two adjacent homopolar magnets in the direction Y. Preferably, the magnet array further includes an H magnet 13. The H magnet 13 is located between the N magnet 11 and the S magnet 12, and the magnetization direction of the H magnet 13 is pointing from the S magnet 12 to the N magnet 11 to enhance the magnetic field strength at the position where the mover 20 is located above the stator 10 (+Z direction).

The coil array A21 includes at least an X coil array and a Y coil array. The X coil array includes at least a set of X three-phase coils, the set of X three-phase coils includes at least three X coils with the same size. The Y coil array includes at least a set of Y three-phase coils, the set of Y three-phase coils includes at least three Y coils with the same size. In this embodiment (as shown in FIG. 1), the X coil array includes two sets of X three-phase coils (a first set of X three-phase coils L11 and a second set of X three-phase coils L12), each set of X three-phase coils includes six X coils L111 of the same size. Each X coil is arranged on a plurality of double-layer structures that have the same XY position and are arranged adjacently along the direction Z. The upper and lower layers of each double-layer structure of the X coil extend respectively on a plane substantially perpendicular to the direction Z, and the direction Z is substantially perpendicular to the first plane. The size of the X coil L111 in the direction Y is larger than the size in the direction X.

The Y coil array includes two sets of Y three-phase coils (a first set of Y three-phase coils L21 and a second set of Y three-phase coils L22), each set of Y three-phase coils includes six Y coils L211 of the same size. Each Y coil is arranged on a plurality of double-layer structures that have the same XY position and are arranged adjacently along the direction Z. The upper and lower layers of each double-layer structure of the Y coil extend respectively on a plane substantially perpendicular to the direction Z. The size of the Y coil L211 in the direction X is larger than the size in the direction Y.

The upper layer of the n^{-th} double-layer structure from the top to the bottom of all the coils in the two sets of X three-phase coils (L11 and L12), and the upper layer of the n^{-th} double-layer structure from the top to the bottom of all the coils in the two sets of Y three-phase coils (L21 and L22), are arranged in the same plane substantially parallel to the second plane, where n=1, 2, 3, ...; the lower layer of the n^{-th} double-layer structure from the top to the bottom of all the coils in the two sets of X three-phase coils (L11 and L12), and the lower layer of the n^{-th} double-layer structure from the top to the bottom of all the coils in the two sets of Y three-phase coils (L21 and L22), are arranged in the same plane substantially parallel to the second plane, where n=1, 2, 3, ...; the distance dₓₓ between the center positions of the two sets of X three-phase coils (L11 and L12) in the direction X is λx/3, and the distance d_{yy} between the center positions of the two sets of Y three-phase coils (L21 and L22) in the direction Y is λy/3.

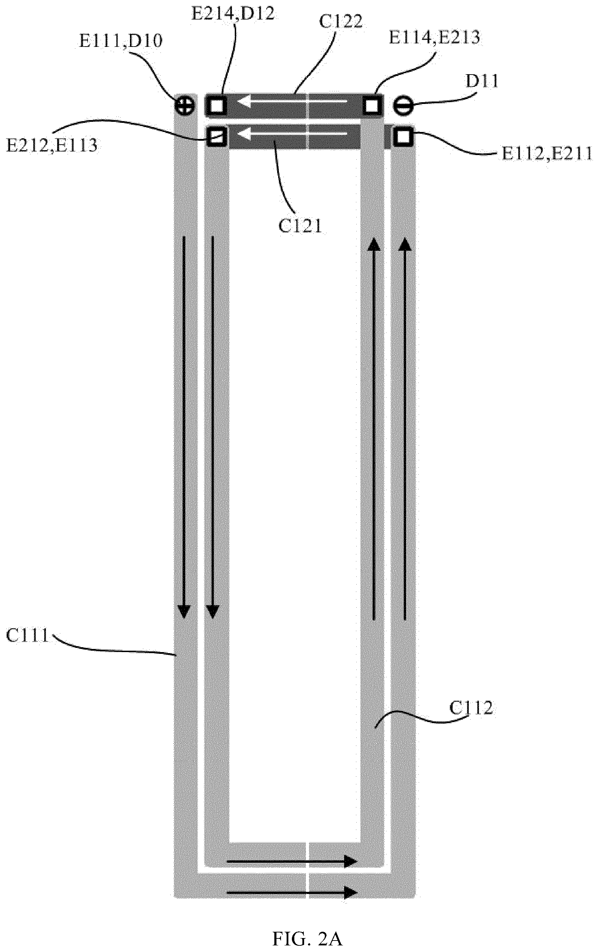

Each X coil is wound at least two turns on each double-layer structure. In addition, each turn of coil is arranged on a double-layer structure, that is, a part of the conductor of each turn of coil is located on the upper layer of the double-layer structure, the other part of the conductor is located on the lower layer of the double-layer structure, the two parts of conductor are connected in series by the conductor between the two layers, so that the current flows to and fro at least once between the upper layer and the lower layer of each double-layer structure. To be specific, the top double-layer structure, middle double-layer structure and bottom double-layer structure of the X coil are shown in FIGS. 2A to 2C. The bottom double-layer structure is the closest to the magnet array, followed by the middle double-layer structure and the top double-layer structure. The top, middle, and bottom double-layer structures of an X coil are all configured at the same XY position but at different Z positions.

As shown in FIG. 2A, the top double-layer structure of an X coil L111 includes at least a first turn of X upper conductor C111, a second turn of X upper conductor C112, a first turn of X lower conductor C121 and a second turn of X lower conductor C122. The first turn of X upper conductor C111 and the second turn of X upper conductor C112 are U-shaped at right angles respectively, and the first turn of X upper conductor C111 is arranged outside the second turn of X upper conductor C112. The first turn of X lower conductor C121 and the second turn of X lower conductor C122 are rectilinear respectively, and the first turn of X lower conductor C121 is arranged inside the second turn of X lower conductor C122. The projections of the first turn of X upper conductor C111 and the first turn of X lower conductor C121 on the plane X-Y are roughly rectangular, and the projections of the second turn of X upper conductor C112 and the second turn of X lower conductor C122 on the plane X-Y are roughly rectangular. The current inflow end E111 of the first turn of X upper conductor C111 is brought into conduction with the current inflow point D10 of the double-layer structure, the current outflow end E112 of the first turn of X upper conductor C111 is brought into conduction with the current inflow end E211 of the first turn of X lower conductor C121, the current outflow end E212 of the first turn of X lower conductor C121 is brought into conduction with the current inflow end E113 of the second turn of X upper conductor C112, the current outflow end E114 of the second turn of X upper conductor C112 is brought into conduction with the current inflow end E213 of the second turn of X lower conductor C122, the current outflow end E214 of the second turn of X lower conductor C122 is brought into conduction with the current inflow point D12 of the next double-layer structure. The current inflow point D10 of the top double-layer structure is the current inflow point of the entire X coil. In the figure, arrows are used to schematically indicate the process of the current flowing to and fro between the upper layer and the lower layer of the top double-layer structure of the X coil.

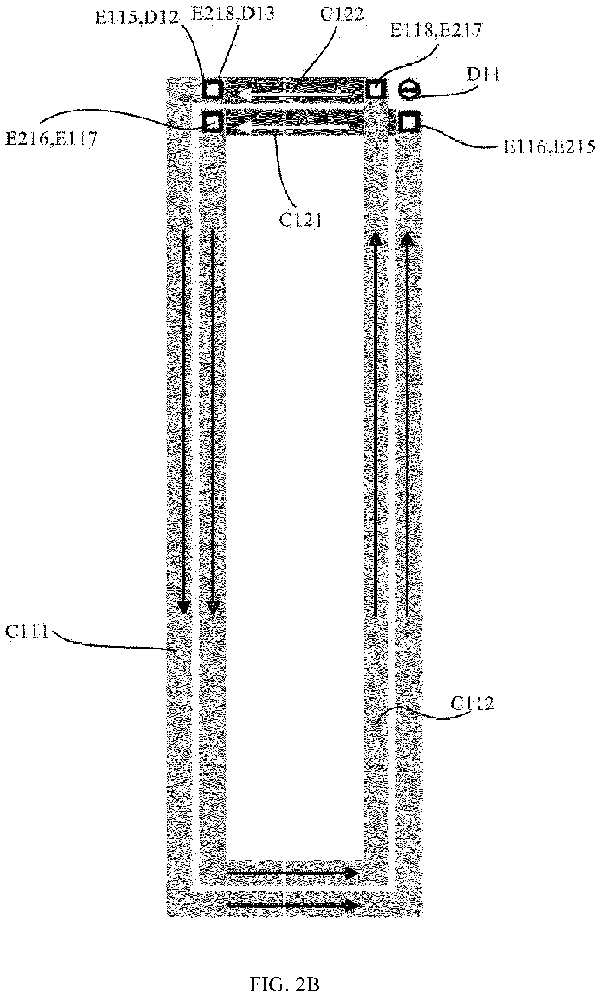

As shown in FIG. 2B, the middle double-layer structure of an X coil L111 includes at least a first turn of X upper conductor C111, a second turn of X upper conductor C112, a first turn of X lower conductor C121 and a second turn of X lower conductor C122. The first turn of X upper conductor C111 and the second turn of X upper conductor C112 are U-shaped at right angles respectively, and the first turn of X upper conductor C111 is arranged outside the second turn of X upper conductor C112. The first turn of X lower conductor C121 and the second turn of X lower conductor C122 are rectilinear respectively, and the first turn of X lower conductor C121 is arranged inside the second turn of X lower conductor C122. The projections of the first turn of X upper conductor C111 and the first turn of X lower conductor C121 on the plane X-Y are roughly rectangular, and the projections of the second turn of X upper conductor C112 and the second turn of X lower conductor C122 on the plane X-Y are roughly rectangular. The current inflow end E115 of the first turn of X upper conductor C111 is brought into conduction with the current inflow point D12 of the double-layer structure, the current outflow end E116 of the first turn of X upper conductor C111 is brought into conduction with the current inflow end E215 of the first turn of X lower conductor C121, the current outflow end E216 of the first turn of X lower conductor C121 is brought into conduction with the current inflow end E117 of the second turn of X upper conductor C112, the current outflow end E118 of the second turn of X upper conductor C112 is brought into conduction with the current inflow end E217 of the second turn of X lower conductor C122, and the current outflow end E218 of the second turn of X lower conductor C122 is brought into conduction with the current inflow point D13 of the next double-layer structure. In the figure, arrows schematically indicate the process of the current flowing to and fro between the upper layer and the lower layer of the middle double-layer structure of the X coil.

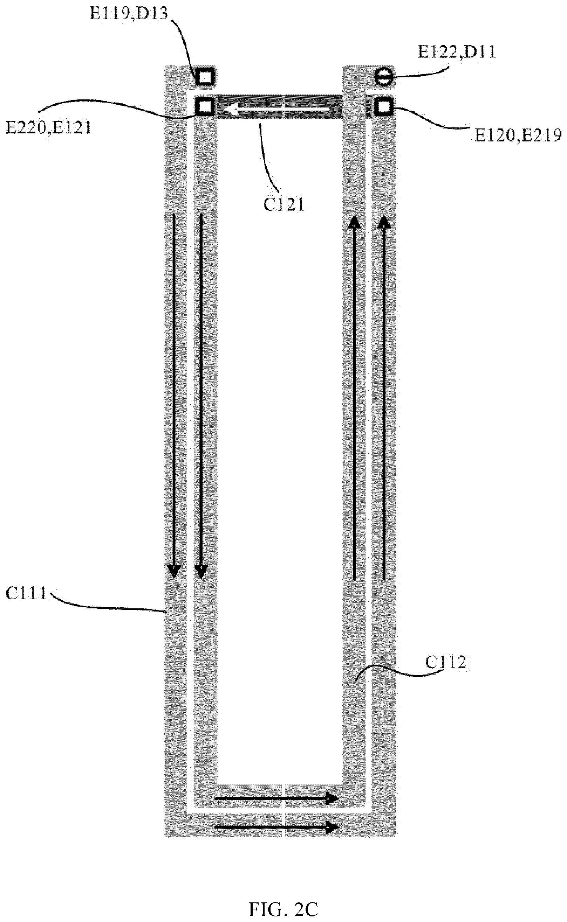

As shown in FIG. 2C, the bottom double-layer structure of an X coil L111 at least includes a first turn of X upper conductor C111, a second turn of X upper conductor C112 and a first turn of X lower conductor C121. The first turn of X upper conductor C111 and the second turn of X upper conductor C112 are U-shaped at right angles respectively, and the first turn of X upper conductor C111 is arranged outside the second turn of X upper conductor C112, the first turn of X lower conductor C121 is rectilinear, the projections of the first turn of X upper conductor C111 and the first turn of X lower conductor C121 on the plane X-Y are roughly rectangular. The current inflow end E119 of the first turn of X upper conductor C111 is brought into conduction with the current inflow point D13 of the double-layer structure, the current outflow end E120 of the first turn of X upper conductor C111 is brought into conduction with the current inflow end E219 of the first turn of X lower conductor C121, the current outflow end E220 of the first turn of X lower conductor C121 is brought into conduction with the current inflow end E121 of the second turn of X upper conductor C112, the current outflow end E122 of the second turn of X upper conductor C112 is brought into conduction with the current outflow point D11 of the entire X coil. In the figure, the arrows schematically indicate the process of the current flowing to and fro between the upper layer and the lower layer of the bottom double-layer structure of the X coil.

The conductors in the different conductor layers of the above X coil are electrically connected through the vias in the printed circuit board, the current outflow point of the X coil is a through hole in the printed circuit board, which penetrates the top double-layer structure of the X coil to the bottom double-layer structure. In addition, in order to increase the space ratio of the conductor, the larger the width Cₜ of the conductor, the better.

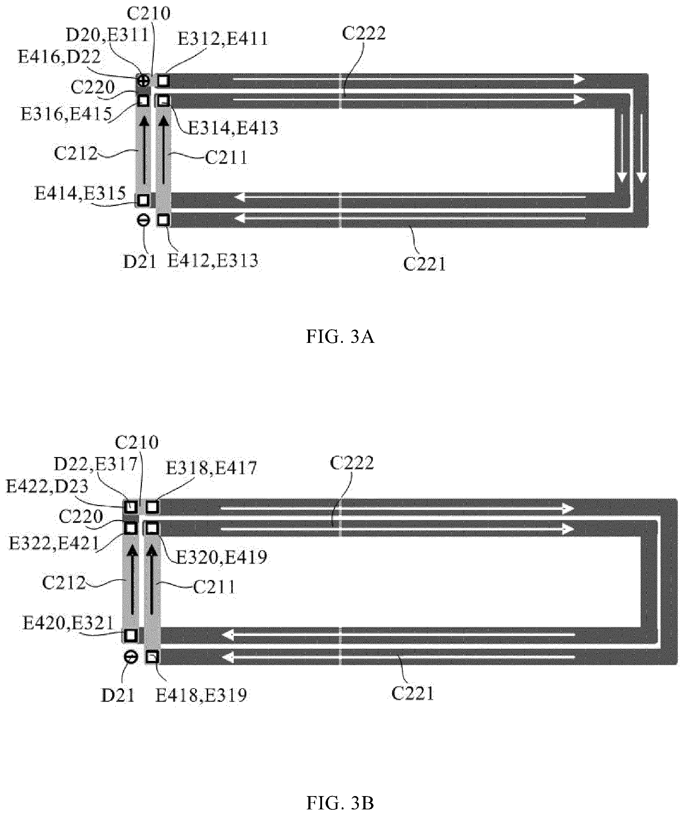

Each Y coil is wound with at least two turns on each double-layer structure, and each turn of coil is arranged on a double-layer structure. A part of the conductor of each turn of coil is located on the upper layer of the double-layer structure, the other part of the conductor is located on the lower layer of the double-layer structure, the two parts of conductor are connected in series by the conductor between the two layers, so that the current flows to and fro at least once between the upper layer and the lower layer of each double-layer structure. To be specific, the top double-layer structure, middle double-layer structure and bottom double-layer structure of the Y coil are shown in FIGS. 3A to 3C. The bottom double-layer structure is the closest to the magnet array, followed by the middle double-layer structure and the top double-layer structure. The top, middle, and bottom double-layer structure of a Y coil are all configured at the same XY position but at different Z positions.

As shown in FIG. 3A, the top double-layer structure of a Y coil L211 at least includes an upper drain conductor C210, a first turn of Y upper conductor C211, a second turn of Y upper conductor C212, a lower drain conductor C220, a first turn of Y lower conductor C221 and a second turn of Y lower conductor C222. The upper drain conductor C210, the lower drain conductor C220, the first turn of Y upper conductor C211 and the second turn of Y upper conductor C212 are rectilinear respectively, and the first turn of Y upper conductor C211 is arranged inside the second turn of Y upper conductor C212. The first turn of Y lower conductor C221 and the second turn of Y lower conductor C222 are U-shaped at right angles respectively, and the first turn of Y lower conductor C221 is arranged outside of the second turn of Y lower conductor C222. The projections of the upper drain conductor C210, the first turn of Y upper conductor C211 and the first turn of Y lower conductor C221 on the plane X-Y are roughly rectangular, and the projections of the second turn of Y upper conductor C212 and the second turn of Y lower conductor C222 on the plane X-Y are roughly rectangular.

One end E311 of the upper drain conductor C210 is connected to the current inflow point D20 of the double-layer structure, the other end E312 is brought into conduction with the current inflow end E411 of the first turn of Y lower conductor C221, the current outflow end E412 of the first turn of Y lower conductor C221 is brought into conduction with the current inflow end E313 of the first turn of Y upper conductor C211, the current outflow end E314 of the first turn of Y upper conductor C211 is brought into conduction with the current inflow end E413 of the second turn of Y lower conductor C222, the current outflow end E414 of the second turn of Y lower conductor C222 is brought into conduction with the current inflow end E315 of the second turn of Y upper conductor C212, the current outflow end E316 of the second turn of Y upper conductor C212 is brought into conduction with the current inflow end E415 of the lower drain conductor C220, the current outflow end E416 of the lower drain conductor C220 is brought into conduction with the current inflow point D22 of the next double-layer structure, wherein the current inflow point of the top double-layer structure is the current inflow point of the entire Y coil. In the figure, arrows are used to schematically indicate the process of the current flowing to and fro between the upper and lower layers of the top double-layer structure of the Y coil.

As shown in FIG. 3B, the middle double-layer structure of a Y coil L211 at least includes an upper drain conductor C210, a first turn of Y upper conductor C211, a second turn of Y upper conductor C212, a lower drain conductor C220, a first turn of Y lower conductor C221 and the second turn of Y lower conductor C222. The upper drain conductor C210, the lower drain conductor C220, the first turn of Y upper conductor C211 and the second turn of Y upper conductor C212 are rectilinear respectively, and the first turn of Y upper conductor C211 is arranged inside the second turn of Y upper conductor C212. The first turn of Y lower conductor C221 and the second turn of Y lower conductor C222 are U-shaped at right angles respectively, and the first turn of Y lower conductor C221 is arranged outside of the second turn of Y lower conductor C222. The projections of the upper drain conductor C210, the first turn of Y upper conductor C211 and the first turn of Y lower conductor C221 on the plane X-Y are roughly rectangular, and the projections of the second turn of Y upper conductor C212 and the second turn of Y lower conductor C222 on the plane X-Y are roughly rectangular.

One end E317 of the upper drain conductor C210 is connected to the current inflow point D22 of the double-layer structure, the other end E318 is brought into conduction with the current inflow end E417 of the first turn of Y lower conductor C221, the current outflow end E418 of the first turn of Y lower conductor C221 is brought into conduction with the current inflow end E319 of the first turn of Y upper conductor C211, the current outflow end E320 of the first turn of Y upper conductor C211 is brought into conduction with the current inflow end E419 of the second turn of Y lower conductor C222, the current outflow end E420 of the second turn of Y lower conductor C222 is brought into conduction with the current inflow end E321 of the second turn of Y upper conductor C212, the current outflow end E322 of the second turn of Y upper conductor C212 is brought into conduction with the current inflow end E421 of the lower drain conductor C220, the current outflow end E422 of the lower drain conductor C220 is brought into conduction with the current inflow point D23 of the next double-layer structure. In the figure, arrows are used to schematically indicate the process of the current flowing to and fro between the upper layer and the lower layer of the middle double-layer structure of the Y coil.

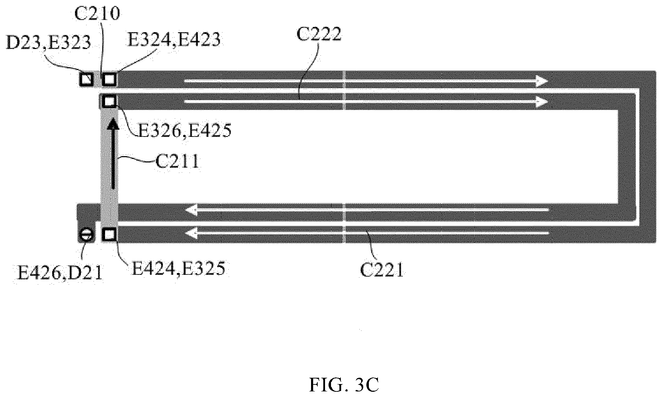

As shown in FIG. 3C, the bottom double-layer structure of a Y coil at least includes an upper drain conductor C210, a first turn of Y upper conductor C211, a first turn of Y lower conductor C221, and a second turn of Y lower conductor C222. The upper drain conductor C210 and the first turn of Y upper conductor C211 are rectilinear respectively. The first turn of Y lower conductor C221 and the second turn of Y lower conductor C222 are U-shaped at right angles respectively, and the first turn of Y lower conductor C221 is arranged outside of the second turn of Y lower conductor C222. The projections of the upper drain conductor C210, the first turn of Y upper conductor C211 and the first turn of Y lower conductor C221 on the plane X-Y are roughly rectangular. One end E323 of the upper drain conductor C210 is connected to the current inflow point D23 of the double-layer structure, the other end E324 is brought into conduction with the current inflow end E423 of the first turn of Y lower conductor C221, the current outflow end E424 of the first turn of Y lower conductor C221 is brought into conduction with the current inflow end E325 of the first turn of Y upper conductor C211, the current outflow end E326 of the first turn of Y upper conductor C211 is brought into conduction with the current inflow end E425 of the second turn of Y lower conductor C222, the current outflow end E426 of the second turn of Y lower conductor C222 is brought into conduction with the current outflow point D21 of the entire Y coil. In the figure, arrows are used to schematically indicate the process of the current flowing to and fro between the upper layer and the lower layer of the bottom double-layer structure of the Y coil.

The conductors in the different conductor layers of the above Y coil are electrically connected through the vias in the printed circuit board, the current outflow point of the Y coil is a through hole in the printed circuit board, which penetrates the top double-layer structure of the Y coil to the bottom double-layer structure.

In the above embodiment, an X coil or a Y coil is wound two turns in a double-layer structure, but the present invention is not limited to this. In other embodiments, an X coil or a Y coil can be wound more than two turns in a double-layer structure, the winding method is similar to the above embodiment. Besides, a coil may have multiple identical middle double-layer structures. Current flows from the top double-layer structure into the first middle double-layer structure, then flows into the second middle double-layer structure, and so on, and finally flows into the bottom double-layer structure. In another embodiment, a coil can also have only two double-layer structures, namely, a top double-layer structure and a bottom double-layer structure, without a middle double-layer structure.

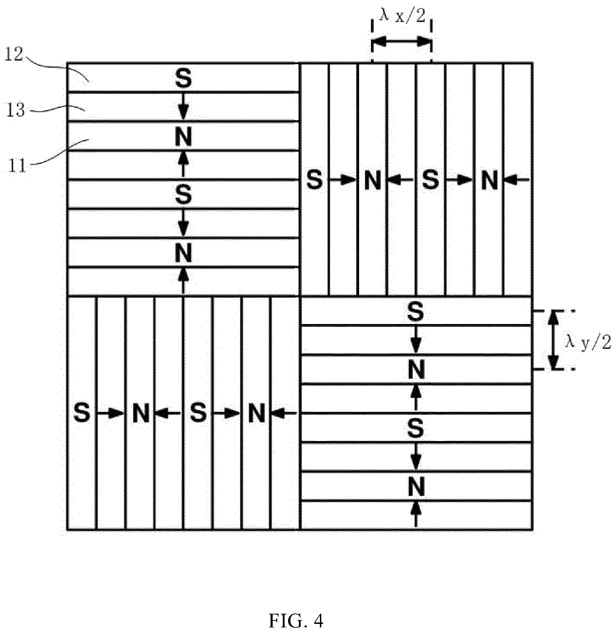

FIG. 4 shows another variant design of the stator magnet array used in the above embodiment, and this magnet arrangement also belongs to the Halbach array. Adopting the magnet arrangement shown in FIG. 4 can combine a plurality of coil arrays of the present invention in the plane X-Y. As shown in FIG. 4, a plurality of S magnets 12 and N magnets 11 extend linearly along the direction X, and are arranged one by one alternately in the direction Y to form a first magnet block, the spatial period λy of the formed magnetic field in the direction Y is twice the distance in the direction Y between the S magnet 12 and its adjacent N magnet 11 in the first magnet block. A plurality of S magnets 12 and N magnets 11 extend linearly along the direction Y, and are arranged one by one alternately in the direction X to form a second magnet block, the spatial period λx of the formed magnetic field in the direction X is twice the distance in the direction X between the S magnet 12 and its adjacent N magnet 11 in the second magnet block. The first magnet block and the second magnet block are arranged in rows and columns on the first plane, and are arranged alternately in each column and in each row. Preferably, the first magnet block and the second magnet block further include an H magnet 13. The H magnet 13 is located between the N magnet 11 and the S magnet 12, and the magnetization direction of the H magnet 13 is pointing from the S magnet 12 to the N magnet 11 to enhance the magnetic field strength at the position where the mover 20 is located above the stator 10 (+Z direction).

The above are only specific embodiments of the present invention. The protection scope of the present invention is not limited thereto.

## Claims

1. A planar motor displacement device (1), wherein
the device (1) at least includes a stator (10) and a mover (20),
the stator (10) includes at least a magnet array (A11), which extends on a first plane parallel to a direction X and a direction Y to form a working area, the mover (20) at least includes a coil array (A21), the coil array (A21) of the mover (20) is arranged on a second plane parallel to the first plane and interacts with the magnet array (A11), enabling the mover (20) to produce displacements in at least two directions within the working area;
the direction X is approximately perpendicular to the direction Y;
the magnet array (A11) at least includes a S magnet (12) and an N magnet (11), the S magnet (12) and the N magnet (11) are arranged periodically in the direction X and the direction Y;
the coil array (A21) at least includes an X coil array and a Y coil array; the X coil array at least includes a set of X three-phase coils, the set of X three-phase coils at least includes three X coils of a same size; the Y coil array at least includes a set of Y three-phase coils, the set of Y three-phase coils at least includes three Y coils of a same size; the size of the X coil in the direction Y is greater than in the direction X, the size of the Y coil in the direction X is greater than in the direction Y;
each of the X coils is arranged on a plurality of first double-layer structures that have a same XY position and are arranged adjacently along a direction Z, each of the X coils is wound at least two turns on each first double-layer structure, and each turn of the X coil is arranged on a first double-layer structure of the plurality of first double-layer structures, the projection of each turn of the X coil is roughly rectangular, of which the two long sides and one short side are arranged on the first layer of said first double-layer structure and the other short side is arranged on the second layer of said first double-layer structure, conductors of each turn arranged on the first layer and the second layer respectively are connected in series by a conduction path between the two layers, so that a current flows to and fro at least once between the two layers of each first double-layer structure;
each of the Y coils is arranged on a plurality of second double-layer structures that have a same XY position and are arranged adjacently along a direction Z, each of the Y coils is wound at least two turns on each second double-layer structure, and each turn of the Y coil is arranged on a second double-layer structure of the plurality of second double-layer structures, the projection of each turn of the Y coil is roughly rectangular, of which the two long sides and one short side are arranged on the first layer of said second double-layer structure and the other short side is arranged on the second layer of said second double-layer structure, conductors of each turn arranged on the first layer and the second layer respectively are connected in series by a conduction path between the two layers, so that a current flows to and fro at least once between the two layers of each second double-layer structure;
the upper and lower layers of each double-layer structure of the X coil or the Y coil extend respectively on a plane substantially perpendicular to the direction Z;
the direction Z is substantially perpendicular to the first plane.

2. The planar motor displacement device (1) of claim 1, **characterized in that**,
the S magnet (12) and the N magnet (11) are arranged in rows and columns on the first plane, and are arranged alternately in each column and in each row, a spatial period λx of the formed magnetic field in the direction X is equal to a distance between two adjacent homopolar magnets in the direction X, and the spatial period λy in the direction Y is equal to the distance between two adjacent homopolar magnets in the direction Y.

3. The planar motor displacement device (1) of claim 1, **characterized in that**,
a plurality of the S magnets (12) and the N magnets (11) linearly extend along the direction X, and are arranged one by one alternately in the direction Y to form a first magnet block, a spatial period λy of the formed magnetic field in the direction Y is twice a distance in the direction Y between the S magnet (12) and the adjacent N magnet (11) in the first magnet block;
a plurality of the S magnets (12) and the N magnets (11) linearly extend along the direction Y, and are arranged one by one alternately in the direction X to form a second magnet block, the spatial period λx of the formed magnetic field in the direction X is twice the distance in the direction X between the S magnet (12) and the adjacent N magnet (11) in the second magnet block;
the first magnet block and the second magnet block are arranged in rows and columns on the first plane, and are arranged alternately in each column and in each row.

4. The planar motor displacement device (1) of claim 2 or 3, **characterized in that**,
the X coil array at least includes two sets of X three-phase coils of a same size, and the Y coil array at least includes two sets of Y three-phase coils of a same size;
the upper layer of the n^{-th} double-layer structure from the top to the bottom of all of the two sets of X three-phase coils, and the upper layer of the n^{-th} double-layer structure from the top to the bottom of all of the two sets of Y three-phase coils, are arranged in a same plane substantially parallel to the second plane, where n=1, 2, 3, ...;
the lower layer of the n^{-th} double-layer structure from the top to the bottom of all of the two sets of X three-phase coils, and the lower layer of the n^{-th} double-layer structure from the top to the bottom of all of the two sets of Y three-phase coils, are arranged in a same plane substantially parallel to the second plane, where n=1, 2, 3, ...;
the distance dₓₓ between center positions of the two sets of X three-phase coils in the direction X is λx/3, and the distance d_{yy} between the center positions of the two sets of Y three-phase coils in the direction Y is λy/3.

5. The planar motor displacement device (1) of any of claims 1-3, **characterized in that**,
the magnet array further includes an H magnet (13), the H magnet (13) is located between the S magnet (12) and the N magnet (11), and a magnetization direction of the H magnet (13) is pointing from the S magnet (12) to the N magnet (11).

6. The planar motor displacement device (1) of any of claims 1-3, **characterized in that**,
a top double-layer structure or a middle double-layer structure of the X coil at least includes a first turn of X upper conductor (C111), a second turn of X upper conductor (C112), a first turn of X lower conductor (C121), and a second turn of X lower conductor (C122),
the first turn of X upper conductor (C111) and the second turn of X upper conductor (C112) are U-shaped at right angles respectively, and the first turn of X upper conductor (C111) is arranged outside the second turn of X upper conductor (C112),
the first turn of X lower conductor (C121) and the second turn of X lower conductor (C122) are rectilinear respectively, and the first turn of X lower conductor (C121) is arranged inside the second turn of X lower conductor (C122),
projections of the first turn of X upper conductor (C111) and the first turn of X lower conductor (C121) on a plane X-Y are roughly rectangular, and the projections of the second turn of X upper conductor (C112) and the second turn of X lower conductor (C122) on the plane X-Y are roughly rectangular,
a current inflow end (E111) of the first turn of X upper conductor (C111) is brought into conduction with a current inflow point (D10) of the double-layer structure, a current outflow end (E112) of the first turn of X upper conductor (C111) is brought into conduction with the current inflow end (E211) of the first turn of X lower conductor (C121), the current outflow end (E212) of the first turn of X lower conductor (C121) is brought into conduction with the current inflow end (E113) of the second turn of X upper conductor (C112), the current outflow end (E114) of the second turn of X upper conductor (C112) is brought into conduction with the current inflow end (E213) of the second turn of X lower conductor (C122), the current outflow end (E214) of the second turn of X lower conductor (C122) is brought into conduction with the current inflow point (D12) of the next double-layer structure, wherein the current inflow point (D12) of the top double-layer structure is the current inflow point of the entire X coil.

7. The planar motor displacement device (1) of any of claims 1-3, **characterized in that**,
a bottom double-layer structure of the X coil (L111) at least includes a first turn of X upper conductor (C111), a second turn of X upper conductor (C112) and a first turn of X lower conductor (C121),
the first turn of X upper conductor (C111) and the second turn of X upper conductor (C112) are U-shaped at right angles respectively, and the first turn of X upper conductor (C111) is arranged outside the second turn of X upper conductor (C112),
the first turn of X lower conductor (C121) is rectilinear, and projections of the first turn of X upper conductor (C111) and the first turn of X lower conductor (C121) on a plane X-Y are roughly rectangular,
a current inflow end (E119) of the first turn of X upper conductor (C111) is brought into conduction with a current inflow point (D13) of the double-layer structure, a current outflow end (E120) of the first turn of X upper conductor (C111) is brought into conduction with the current inflow end (E219) of the first turn of X lower conductor (C121), the current outflow end (E220) of the first turn of X lower conductor (C121) is brought into conduction with the current inflow end (E121) of the second turn of X upper conductor (C112), the current outflow end (E122) of the second turn of X upper conductor (C112) is brought into conduction with a current outflow point (D11) of the entire X coil.

8. The planar motor displacement device (1) of any of claims 1-3, **characterized in that**,
a top double-layer structure or a middle double-layer structure of the Y coil at least includes an upper drain conductor (C210), a first turn of Y upper conductor (C211), a second turn of Y upper conductor (C212), a lower drain conductor (C220), a first turn of Y lower conductor (C221) and a second turn of Y lower conductor (C222),
the upper drain conductor (C210), the lower drain conductor (C220), the first turn of Y upper conductor (C211) and the second turn of Y upper conductor (C212) are rectilinear respectively, and the first turn of Y upper conductor (C211) is arranged inside the second turn of Y upper conductor (C212),
the first turn of Y lower conductor (C221) and the second turn of the Y lower conductor (C222) are U-shaped at right angles respectively, and the first turn of Y lower conductor (C221) is arranged outside the second turn of Y lower conductor (C222),
projections of the upper drain conductor (C210), the first turn of Y upper conductor (C211) and the first turn of Y lower conductor (C221) on a plane X-Y are roughly rectangular, and the projections of the second turn of Y upper conductor (C212) and the second turn of Y lower conductor (C222) on the plane X-Y are roughly rectangular,
one end (E311) of the upper drain conductor (C210) is connected to a current inflow point (D20) of the double-layer structure, the other end (E312) of the upper drain conductor (C210) is brought into conduction with a current inflow end (E411) of the first turn of Y lower conductor (C221), a current outflow end (E412) of the first turn of Y lower conductor (C221) is brought into conduction with the current inflow end (E313) of the first turn of Y upper conductor (C211), the current outflow end (E314) of the first turn of Y upper conductor (C211) is brought into conduction with the current inflow end (E413) of the second turn of Y lower conductor (C222), the current outflow end (E414) of the second turn of Y lower conductor (C222) is brought into conduction with the current inflow end (E315) of the second turn of Y upper conductor (C212), the current outflow end (E316) of the second turn of Y upper conductor (C212) is brought into conduction with the current inflow end (E415) of the lower drain conductor (C220), and the current outflow end (E416) of the lower drain conductor (C220) is brought into conduction with the current inflow end (D22) of the next double-layer structure, wherein the current inflow point of the top double-layer structure is the current inflow point of the entire Y coil.

9. The planar motor displacement device (1) of any of claims 1-3, **characterized in that**,
a bottom double-layer structure of the Y coil at least includes an upper drain conductor (C210), a first turn of Y upper conductor (C211), a first turn of Y lower conductor (C221) and a second turn of Y lower conductor (C222),
the upper drain conductor (C210) and the first turn of Y upper conductor (C211)are rectilinear respectively,
the first turn of Y lower conductor (C221) and the second turn of Y lower conductor (C222) are U-shaped at right angles respectively, and the first turn of Y lower conductor (C221) is arranged outside the second turn of Y lower conductor (C222),
projections of the upper drain conductor (C210), the first turn of Y upper conductor (C211) and the first turn of Y lower conductor (C221) on a plane X-Y are roughly rectangular,
one end (E323) of the upper drain conductor (C210) is connected to a current inflow point (D23) of the double-layer structure, the other end (E324) of the upper drain conductor (C210) is brought into conduction with a current inflow end (E423) of the first turn of Y lower conductor (C221), a current outflow end (E424) of the first turn of Y lower conductor (C221) is brought into conduction with the current inflow end (E325) of the first turn of Y upper conductor (C211), the current outflow end (E326) of the first turn of Y upper conductor (C211) is brought into conduction with the current inflow end (E425) of the second turn of Y lower conductor (C222), the current outflow end (E426) of the second turn of Y lower conductor (C222) is brought into conduction with a current outflow point (D21) of the entire Y coil.

10. The planar motor displacement device (1) of claim 9, **characterized in that**,
the conductors in different conductor layers of the coil array (A21) are electrically connected through vias in a printed circuit board,
the current outflow point of the coil is a through hole in the printed circuit board, which hole penetrates the top double-layer structure of the coil to the bottom double-layer structure.

## Patentansprüche

1. Eine Vorrichtung (1) zur Verschiebung durch einen Planarmotor, wobei
die Vorrichtung (1) mindestens einen Stator (10) und einen Läufer (20) umfasst,
wobei der Stator (10) mindestens eine Magnetanordnung (A11) umfasst, die sich auf einer ersten Ebene parallel zu einer Richtung X und einer Richtung Y erstreckt, um einen Arbeitsbereich zu bilden, der Läufer (20) mindestens eine Spulenanordnung (A21) umfasst, die Spulenanordnung (A21) des Läufers (20) auf einer zweiten Ebene parallel zur ersten Ebene angeordnet ist und mit der Magnetanordnung (A11) zusammenwirkt, wodurch der Läufer (20) Verschiebungen in mindestens zwei Richtungen innerhalb des Arbeitsbereichs erzeugen kann;
wobei die Richtung X im Wesentlichen senkrecht zur Richtung Y ist;
wobei die Magnetanordnung (A11) mindestens einen S-Magneten (12) und einen N-Magneten (11) umfasst, wobei der S-Magnet (12) und der N-Magnet (11) periodisch in Richtung X und in Richtung Y angeordnet sind;
wobei die Spulenanordnung (A21) mindestens eine X-Spulenanordnung und eine Y-Spulenanordnung umfasst; die X-Spulenanordnung mindestens einen Satz von X-Dreiphasenspulen umfasst, wobei der Satz von X-Dreiphasenspulen mindestens drei X-Spulen gleicher Größe umfasst; die Y-Spulenanordnung mindestens einen Satz von Y-Dreiphasenspulen umfasst, wobei der Satz von Y-Dreiphasenspulen mindestens drei Y-Spulen gleicher Größe umfasst; die Größe der X-Spule in Richtung Y größer ist als in Richtung X, und die Größe der Y-Spule in Richtung X größer ist als in Richtung Y;
wobei jede der X-Spulen auf einer Vielzahl von ersten Doppelschichtstrukturen angeordnet ist, die dieselbe XY-Position haben und entlang einer Richtung Z benachbart angeordnet sind, jede der X-Spulen mit mindestens zwei Windungen auf jeder ersten Doppelschichtstruktur gewickelt ist, und jede Windung der X-Spule auf einer ersten Doppelschichtstruktur der Vielzahl von ersten Doppelschichtstrukturen angeordnet ist, die Projektion jeder Windung der X-Spule ungefähr rechteckig ist, wobei die beiden Längsseiten und eine kurze Seite auf der ersten Schicht der ersten Doppelschichtstruktur angeordnet sind und die andere kurze Seite auf der zweiten Schicht der ersten Doppelschichtstruktur angeordnet ist, Leiter jeder Windung, die jeweils auf der ersten Schicht und der zweiten Schicht angeordnet sind, durch einen Leitungsweg zwischen den beiden Schichten in Reihe geschaltet sind, so dass ein Strom mindestens einmal zwischen den beiden Schichten jeder ersten Doppelschichtstruktur hin und her fließt;
wobei jede der Y-Spulen auf einer Vielzahl von zweiten Doppelschichtstrukturen angeordnet ist, die eine gleiche XY-Position haben und entlang einer Richtung Z benachbart angeordnet sind, jede der Y-Spulen mit mindestens zwei Windungen auf jeder zweiten Doppelschichtstruktur gewickelt ist und jede Windung der Y-Spule auf einer zweiten Doppelschichtstruktur der Vielzahl von zweiten Doppelschichtstrukturen angeordnet ist, wobei die Projektion jeder Windung der Y-Spule ungefähr rechteckig ist, wobei die beiden Längsseiten und eine Kurzseite auf der ersten Schicht der zweiten Doppelschichtstruktur angeordnet sind und die andere Kurzseite auf der zweiten Schicht der zweiten Doppelschichtstruktur angeordnet ist, Leiter jeder Windung, die jeweils auf der ersten Schicht und der zweiten Schicht angeordnet sind, durch einen Leitungsweg zwischen den beiden Schichten in Reihe geschaltet sind, so dass ein Strom mindestens einmal zwischen den beiden Schichten jeder zweiten Doppelschichtstruktur hin und her fließt;
wobei sich die obere und untere Schicht jeder Doppelschichtstruktur der X-Spule oder der Y-Spule jeweils auf einer Ebene erstrecken, die im Wesentlichen senkrecht zur Richtung Z ist;
wobei die Richtung Z im Wesentlichen senkrecht zur ersten Ebene ist.

2. Die Vorrichtung (1) zur Verschiebung durch einen Planarmotor nach Anspruch 1, **dadurch gekennzeichnet, dass**
der S-Magnet (12) und der N-Magnet (11) in Reihen und Spalten auf der ersten Ebene angeordnet sind und abwechselnd in jeder Spalte und in jeder Reihe angeordnet sind, eine räumliche Periode λx des gebildeten Magnetfeldes in Richtung X gleich einem Abstand zwischen zwei benachbarten homopolaren Magneten in Richtung X ist, und die räumliche Periode λy in Richtung Y gleich dem Abstand zwischen zwei benachbarten homopolaren Magneten in Richtung Y ist.

3. Die Vorrichtung (1) zur Verschiebung durch einen Planarmotor nach Anspruch 1, **dadurch gekennzeichnet, dass**
eine Vielzahl der S-Magnete (12) und der N-Magnete (11) sich linear entlang der Richtung X erstrecken und einzeln abwechselnd in Richtung Y angeordnet sind, um einen ersten Magnetblock zu bilden, wobei eine räumliche Periode λy des gebildeten Magnetfelds in Richtung Y doppelt so groß ist wie der Abstand in Richtung Y zwischen dem S-Magneten (12) und dem benachbarten N-Magneten (11) im ersten Magnetblock;
wobei eine Vielzahl der S-Magnete (12) und der N-Magnete (11) sich linear entlang der Richtung Y erstrecken und einzeln abwechselnd in der Richtung X angeordnet sind, um einen zweiten Magnetblock zu bilden, wobei die räumliche Periode λx des gebildeten Magnetfelds in der Richtung X doppelt so groß ist wie der Abstand in der Richtung X zwischen dem S-Magneten (12) und dem benachbarten N-Magneten (11) im zweiten Magnetblock;
wobei der erste Magnetblock und der zweite Magnetblock in Reihen und Spalten auf der ersten Ebene angeordnet sind und abwechselnd in jeder Spalte und in jeder Reihe angeordnet sind.

4. Die Vorrichtung (1) zur Verschiebung durch einen Planarmotor nach Anspruch 2 oder 3, **dadurch gekennzeichnet, dass**
die X-Spulenanordnung mindestens zwei Sätze von X-Dreiphasenspulen gleicher Größe umfasst und die Y-Spulenanordnung mindestens zwei Sätze von Y-Dreiphasenspulen gleicher Größe umfasst;
wobei die obere Schicht der n-ten Doppelschichtstruktur von oben nach unten aller beiden Sätze von X-Dreiphasenspulen und die obere Schicht der n-ten Doppelschichtstruktur von oben nach unten aller beiden Sätze von Y-Dreiphasenspulen in einer gleichen Ebene angeordnet sind, die im Wesentlichen parallel zur zweiten Ebene ist, wobei n = 1, 2, 3, ...;
wobei die untere Schicht der n-ten Doppelschichtstruktur von oben nach unten aller beiden Sätze von X-Dreiphasenspulen und die untere Schicht der n-ten Doppelschichtstruktur von oben nach unten aller beiden Sätze von Y-Dreiphasenspulen in derselben Ebene angeordnet sind, die im Wesentlichen parallel zur zweiten Ebene ist, wobei n = 1, 2, 3, ...;
wobei der Abstand dxx zwischen den Mittelpositionen der beiden Sätze von X-Dreiphasenspulen in Richtung X λx/3 beträgt, und der Abstand dyy zwischen den Mittelpositionen der beiden Sätze von Y-Dreiphasenspulen in Richtung Y λy/3 beträgt.

5. Die Vorrichtung (1) zur Verschiebung durch einen Planarmotor nach einem der Ansprüche 1 bis 3, **dadurch gekennzeichnet, dass**
die Magnetanordnung ferner einen H-Magneten (13) umfasst, wobei sich der H-Magnet (13) zwischen dem S-Magneten (12) und dem N-Magneten (11) befindet und eine Magnetisierungsrichtung des H-Magneten (13) vom S-Magneten (12) zum N-Magneten (11) zeigt.

6. Die Vorrichtung (1) zur Verschiebung durch einen Planarmotor nach einem der Ansprüche 1 bis 3, **dadurch gekennzeichnet, dass**
eine obere Doppelschichtstruktur oder eine mittlere Doppelschichtstruktur der X-Spule mindestens eine erste Windung des oberen X-Leiters (C111), eine zweite Windung des oberen X-Leiters (C112), eine erste Windung des unteren X-Leiters (C121) und eine zweite Windung des unteren X-Leiters (C122) umfasst,
wobei die erste Windung des oberen X-Leiters (C111) und die zweite Windung des oberen X-Leiters (C112) jeweils rechtwinklig U-förmig sind und die erste Windung des oberen X-Leiters (C111) außerhalb der zweiten Windung des oberen X-Leiters (C112) angeordnet ist,
wobei die erste Windung des unteren X-Leiters (C121) und die zweite Windung des unteren X-Leiters (C122) jeweils geradlinig sind, und die erste Windung des unteren X-Leiters (C121) innerhalb der zweiten Windung des unteren X-Leiters (C122) angeordnet ist,
wobei die Projektionen der ersten Windung des oberen X-Leiters (C111) und der ersten Windung des unteren X-Leiters (C121) auf einer Ebene X-Y im Wesentlichen rechteckig sind, und die Projektionen der zweiten Windung des oberen X-Leiters (C112) und der zweiten Windung des unteren X-Leiters (C122) auf die Ebene X-Y im Wesentlichen rechteckig sind,
wobei ein Stromzuflussende (E111) der ersten Windung des oberen X-Leiters (C111) mit einem Stromzuflusspunkt (D10) der Doppelschichtstruktur in Stromleitung gebracht wird, ein Stromausgangsende (E112) der ersten Windung des oberen X-Leiters (C111) mit dem Stromzuflussende (E211) der ersten Windung des unteren X-Leiters (C121) in Stromleitung gebracht wird, das Stromausgangsende (E212) der ersten Windung des unteren X-Leiters (C121) mit dem Stromzuflussende (E113) der zweiten Windung des oberen X-Leiters (C112) in Stromleitung gebracht wird, das Stromausgangsende (E114) der zweiten Windung des oberen X-Leiters (C112) mit dem Stromzuflussende (E213) der zweiten Windung des unteren X-Leiters (C122) in Stromleitung gebracht wird, das Stromausgangsende (E214) der zweiten Windung des unteren X-Leiters (C122) mit dem Stromzuflusspunkt (D12) der nächsten Doppelschichtstruktur in Stromleitung gebracht wird, wobei der Stromzuflusspunkt (D12) der oberen Doppelschichtstruktur der Stromzuflusspunkt der gesamten X-Spule ist.

7. Die Vorrichtung (1) zur Verschiebung durch einen Planarmotor nach einem der Ansprüche 1 bis 3, **dadurch gekennzeichnet, dass**
eine untere Doppelschichtstruktur der X-Spule (L111) mindestens eine erste Windung des oberen X-Leiters (C111), eine zweite Windung des oberen X-Leiters (C112) und eine erste Windung des unteren X-Leiters (C121) umfasst,
wobei die erste Windung des oberen X-Leiters (C111) und die zweite Windung des oberen X-Leiters (C112) jeweils rechtwinklig U-förmig sind und die erste Windung des oberen X-Leiters (C111) außerhalb der zweiten Windung des oberen X-Leiters (C112) angeordnet ist,
wobei die erste Windung des unteren X-Leiters (C121) geradlinig ist, und die Projektionen der ersten Windung des oberen X-Leiters (C111) und der ersten Windung des unteren X-Leiters (C121) auf eine X-Y-Ebene im Wesentlichen rechteckig sind,
wobei ein Stromzuflussende (E119) der ersten Windung des oberen X-Leiters (C111) mit einem Stromzuflusspunkt (D13) der Doppelschichtstruktur in Stromleitung gebracht wird, ein Stromausgangsende (E120) der ersten Windung des oberen X-Leiters (C111) mit dem Stromzuflussende (E219) der ersten Windung des unteren X-Leiters (C121) in Stromleitung gebracht wird, das Stromausgangsende (E220) der ersten Windung des unteren X-Leiters (C121) mit dem Stromzuflussende (E121) der zweiten Windung des oberen X-Leiters (C112) in Stromleitung gebracht wird, das Stromausgangsende (E122) der zweiten Windung des oberen X-Leiters (C112) mit einem Stromausgangspunkt (D11) der gesamten X-Spule in Stromleitung gebracht wird.

8. Die Vorrichtung (1) zur Verschiebung durch einen Planarmotor nach einem der Ansprüche 1 bis 3, **dadurch gekennzeichnet, dass**
eine obere Doppelschichtstruktur oder eine mittlere Doppelschichtstruktur der Y-Spule mindestens einen oberen Ableitungsleiter (C210), eine erste Windung des oberen Y-Leiters (C211), eine zweite Windung des oberen Y-Leiters (C212), einen unteren Ableitungsleiter (C220), eine erste Windung des unteren Y-Leiters (C221) und eine zweite Windung des unteren Y-Leiters (C222) umfasst,
wobei der obere Ableitungsleiter (C210), der untere Ableitungsleiter (C220), die erste Windung des oberen Y-Leiters (C211) und die zweite Windung des oberen Y-Leiters (C212) jeweils geradlinig sind und die erste Windung des oberen Y-Leiters (C211) innerhalb der zweiten Windung des oberen Y-Leiters (C212) angeordnet ist,
wobei die erste Windung des unteren Y-Leiters (C221) und die zweite Windung des unteren Y-Leiters (C222) jeweils rechtwinklig U-förmig sind, und die erste Windung des unteren Y-Leiters (C221) außerhalb der zweiten Windung des unteren Y-Leiters (C222) angeordnet ist,
wobei die Projektionen des oberen Ableitungsleiters (C210), der ersten Windung des oberen Y-Leiters (C211) und der ersten Windung des unteren Y-Leiters (C221) auf einer Ebene X-Y im Wesentlichen rechteckig sind, und die Projektionen der zweiten Windung des oberen Y-Leiters (C212) und der zweiten Windung des unteren Y-Leiters (C222) auf die Ebene X-Y im Wesentlichen rechteckig sind,
wobei ein Ende (E311) des oberen Ableitungsleiters (C210) mit einem Stromzuflusspunkt (D20) der Doppelschichtstruktur verbunden ist, das andere Ende (E312) des oberen Ableitungsleiters (C210) mit einem Stromzuflussende (E411) der ersten Windung des unteren Y-Leiters (C221) in Stromleitung gebracht ist, ein Stromausgangsende (E412) der ersten Windung des unteren Y-Leiters (C221) mit dem Stromzuflussende (E313) der ersten Windung des oberen Y-Leiters (C211) in Stromleitung gebracht wird, das Stromausgangsende (E314) der ersten Windung des oberen Y-Leiters (C211) mit dem Stromzuflussende (E413) der zweiten Windung des unteren Y-Leiters (C222) in Stromleitung gebracht wird, das Stromausgangsende (E414) der zweiten Windung des unteren Y-Leiters (C222) mit dem Stromzuflussende (E315) der zweiten Windung des oberen Y-Leiters (C212) in Stromleitung gebracht wird, das Stromausgangsende (E316) der zweiten Windung des oberen Y-Leiters (C212) mit dem Stromzuflussende (E415) des unteren Ableitungsleiters (C220) in Stromleitung gebracht wird, und das Stromausgangsende (E416) des unteren Ableitungsleiters (C220) mit dem Stromzuflussende (D22) der nächsten Doppelschichtstruktur in Stromleitung gebracht wird, wobei der Stromzuflusspunkt der oberen Doppelschichtstruktur der Stromzuflusspunkt der gesamten Y-Spule ist.

9. Die Vorrichtung (1) zur Verschiebung durch einen Planarmotor nach einem der Ansprüche 1 bis 3, **dadurch gekennzeichnet, dass**
eine untere Doppelschichtstruktur der Y-Spule mindestens einen oberen Ableitungsleiter (C210), eine erste Windung des oberen Y-Leiters (C211), eine erste Windung des unteren Y-Leiters (C221) und eine zweite Windung des unteren Y-Leiters (C222) umfasst,
wobei der obere Ableitungsleiter (C210) und die erste Windung des oberen Y-Leiters (C211) jeweils geradlinig sind,
wobei die erste Windung des unteren Y-Leiters (C221) und die zweite Windung des unteren Y-Leiters (C222) jeweils rechtwinklig U-förmig sind und die erste Windung des unteren Y-Leiters (C221) außerhalb der zweiten Windung des unteren Y-Leiters (C222) angeordnet ist,
wobei die Projektionen des oberen Ableitungsleiters (C210), der ersten Windung des oberen Y-Leiters (C211) und der ersten Windung des unteren Y-Leiters (C221) auf eine Ebene X-Y im Wesentlichen rechteckig sind,
wobei ein Ende (E323) des oberen Ableitungsleiters (C210) mit einem Stromzuflusspunkt (D23) der Doppelschichtstruktur verbunden ist, das andere Ende (E324) des oberen Ableitungsleiters (C210) mit einem Stromzuflussende (E423) der ersten Windung des unteren Y-Leiters (C221) in Stromleitung gebracht ist, ein Stromausgangsende (E424) der ersten Windung des unteren Y-Leiters (C221) mit dem Stromzuflussende (E325) der ersten Windung des oberen Y-Leiters (C211) in Stromleitung gebracht wird, das Stromausgangsende (E326) der ersten Windung des oberen Y-Leiters (C211) mit dem Stromzuflussende (E425) der zweiten Windung des unteren Y-Leiters (C222) in Stromleitung gebracht wird, das Stromausgangsende (E426) der zweiten Windung des unteren Y-Leiters (C222) mit einem Stromausgangspunkt (D21) der gesamten Y-Spule in Stromleitung gebracht wird.

10. Die Vorrichtung (1) zur Verschiebung durch einen Planarmotor nach Anspruch 9, **dadurch gekennzeichnet, dass**
die Leiter in verschiedenen Leiterschichten der Spulenanordnung (A21) über Vias in einer Leiterplatte elektrisch verbunden sind,
wobei der Stromausgangspunkt der Spule ein Durchgangsloch in der Leiterplatte ist, welches Loch die obere Doppelschichtstruktur der Spule bis zur unteren Doppelschichtstruktur durchdringt.

## Revendications

1. Dispositif de déplacement par moteur planaire (1), dans lequel
le dispositif (1) comprend au moins un stator (10) et un élément mobile (20),
le stator (10) comprend au moins un réseau d'aimants (A11) qui s'étend sur un premier plan parallèle à une direction X et à une direction Y pour former une zone de travail, l'élément mobile (20) comprend au moins un réseau de bobines (A21), le réseau de bobines (A21) de l'élément mobile (20) est disposé sur un deuxième plan parallèle au premier plan et interagit avec le réseau d'aimants (A11), permettant à l'élément mobile (20) de produire des déplacements dans au moins deux directions à l'intérieur de la zone de travail ;
la direction X est approximativement perpendiculaire à la direction Y ;
le réseau d'aimants (A11) comprend au moins un aimant S (12) et un aimant N (11), l'aimant S (12) et l'aimant N (11) sont disposés périodiquement dans la direction X et la direction Y ;
le réseau de bobines (A21) comprend au moins un réseau de bobines de X et un réseau de bobines de Y ; le réseau de bobines de X comprend au moins un ensemble de bobines triphasées de X, l'ensemble de bobines triphasées de X comprend au moins trois bobines de X de même taille ; le réseau de bobines de Y comprend au moins un ensemble de bobines triphasées de Y, l'ensemble de bobines triphasées de Y comprend au moins trois bobines de Y de même taille ; la taille de la bobine de X dans la direction Y est supérieure à celle dans la direction X, la taille de la bobine de Y dans la direction X est supérieure à celle dans la direction Y ;
chacune des bobines de X est disposée sur une pluralité de premières structures à double couche qui ont une même position XY et sont disposées de manière adjacente le long d'une direction Z, chacune des bobines de X est enroulée d'au moins deux spires sur chaque première structure à double couche, et chaque spire de la bobine de X est disposé sur une première structure à double couche de la pluralité de premières structures à double couche, la projection de chaque spire de la bobine de X est sensiblement rectangulaire, dont les deux côtés longs et un côté court sont disposés sur la première couche de ladite première structure à double couche et l'autre côté court est disposé sur la deuxième couche de ladite première structure à double couche, les conducteurs de chaque spire disposés respectivement sur la première couche et la deuxième couche sont connectés en série par un circuit conducteur entre les deux couches, de sorte qu'un courant circule dans les deux sens au moins une fois entre les deux couches de chaque première structure à double couche ;
chacune des bobines de Y est disposée sur une pluralité de deuxièmes structures à double couche qui ont une même position XY et sont disposées de manière adjacente le long d'une direction Z, chacune des bobines de Y est enroulée d'au moins deux spires sur chaque deuxième structure à double couche, et chaque spire de la bobine de Y est disposé sur une deuxième structure à double couche de la pluralité de deuxièmes structures à double couche, la projection de chaque spire de la bobine de Y est sensiblement rectangulaire, dont les deux côtés longs et un côté court sont disposés sur la première couche de ladite deuxième structure à double couche et l'autre côté court est disposé sur la deuxième couche de ladite deuxième structure à double couche, les conducteurs de chaque spire disposés respectivement sur la première couche et la deuxième couche sont connectés en série par un circuit conducteur entre les deux couches, de sorte qu'un courant circule dans les deux sens au moins une fois entre les deux couches de chaque deuxième structure à double couche ;
les couches supérieure et inférieure de chaque structure à double couche de la bobine de X ou de la bobine de Y s'étendent respectivement sur un plan sensiblement perpendiculaire à la direction Z ;
la direction Z est sensiblement perpendiculaire au premier plan.

2. Dispositif de déplacement par moteur planaire (1) selon la revendication 1, **caractérisé en ce que**
l'aimant S (12) et l'aimant N (11) sont disposés en rangées et en colonnes sur le premier plan, et sont disposés en alternance dans chaque colonne et dans chaque rangée, une période spatiale λx du champ magnétique formé dans la direction X est égale à une distance entre deux aimants homopolaires adjacents dans la direction X, et la période spatiale λy dans la direction Y est égale à la distance entre deux aimants homopolaires adjacents dans la direction Y.

3. Dispositif de déplacement par moteur planaire (1) selon la revendication 1, **caractérisé en ce que**
une pluralité d'aimants S (12) et d'aimants N (11) s'étendent linéairement le long de la direction X, et sont disposés l'un après l'autre en alternance dans la direction Y pour former un premier bloc d'aimants, une période spatiale λy du champ magnétique formé dans la direction Y est deux fois supérieure à la distance dans la direction Y entre l'aimant S (12) et l'aimant N (11) adjacent dans le premier bloc d'aimants ;
une pluralité d'aimants S (12) et d'aimants N (11) s'étendent linéairement le long de la direction Y et sont disposés l'un après l'autre en alternance dans la direction X pour former un deuxième bloc d'aimants, la période spatiale λx du champ magnétique formé dans la direction X étant deux fois supérieure à la distance dans la direction X entre l'aimant S (12) et l'aimant N (11) adjacent dans le deuxième bloc d'aimants ;
le premier bloc d'aimants et le deuxième bloc d'aimants sont disposés en rangées et en colonnes sur le premier plan, et sont disposés en alternance dans chaque colonne et dans chaque rangée.

4. Dispositif de déplacement par moteur planaire (1) selon la revendication 2 ou 3, **caractérisé en ce que**
le réseau de bobines de X comprend au moins deux ensembles de bobines triphasées de X de même taille, et le réseau de bobines de Y comprend au moins deux ensembles de bobines triphasées de Y de même taille ;
la couche supérieure de la n-ième structure à double couche, du haut vers le bas, des deux ensembles de bobines triphasées de X, et la couche supérieure de la n-ième structure à double couche, du haut vers le bas, des deux ensembles de bobines triphasées de Y, sont disposées dans un même plan sensiblement parallèle au deuxième plan, où n = 1, 2, 3, ... ;
la couche inférieure de la n-ième structure à double couche, du haut vers le bas, des deux ensembles de bobines triphasées de X, et la couche inférieure de la n-ième structure à double couche, du haut vers le bas, des deux ensembles de bobines triphasées de Y, sont disposées dans un même plan sensiblement parallèle au deuxième plan, où n = 1, 2, 3, ... ;
la distance dxx entre les positions centrales des deux ensembles de bobines triphasées de X dans la direction X est λx/3, et la distance dyy entre les positions centrales des deux ensembles de bobines triphasées de Y dans la direction Y est λy/3.

5. Dispositif de déplacement par moteur planaire (1) selon l'une quelconque des revendications 1 à 3, **caractérisé en ce que**
le réseau d'aimants comprend en outre un aimant H (13), l'aimant H (13) est situé entre l'aimant S (12) et l'aimant N (11), et une direction d'aimantation de l'aimant H (13) est orientée de l'aimant S (12) vers l'aimant N (11).

6. Dispositif de déplacement par moteur planaire (1) selon l'une quelconque des revendications 1 à 3, **caractérisé en ce que**
une structure supérieure à double couche ou une structure intermédiaire à double couche de la bobine de X comprend au moins une première spire du conducteur supérieur de X (C111), une deuxième spire du conducteur supérieur de X (C112), une première spire du conducteur inférieur de X (C121) et une deuxième spire du conducteur inférieur de X (C122),
la première spire du conducteur supérieur de X (C111) et la deuxième spire du conducteur supérieur de X (C112) sont respectivement en forme de U à angle droit, et la première spire du conducteur supérieur de X (C111) est disposée à l'extérieur de la deuxième spire du conducteur supérieur de X (C112),
la première spire du conducteur inférieur de X (C121) et la deuxième spire du conducteur inférieur de X (C122) sont respectivement rectilignes, et la première spire du conducteur inférieur de X (C121) est disposée à l'intérieur de la deuxième spire du conducteur inférieur de X (C122),
les projections de la première spire du conducteur supérieur de X (C111) et de la première spire du conducteur inférieur de X (C121) sur un plan X-Y sont sensiblement rectangulaires, et les projections de la deuxième spire du conducteur supérieur de X (C112) et de la deuxième spire du conducteur inférieur de X (C122) sur le plan X-Y sont sensiblement rectangulaires,
une extrémité d'entrée de courant (E111) de la première spire du conducteur supérieur de X (C111) est mise en conduction avec un point d'entrée de courant (D10) de la structure à double couche, une extrémité de sortie de courant (E112) de la première spire du conducteur supérieur de X (C111) est mise en conduction avec l'extrémité d'entrée de courant (E211) de la première spire du conducteur inférieur de X (C121), l'extrémité de sortie de courant (E212) de la première spire du conducteur inférieur de X (C121) est mise en conduction avec l'extrémité d'entrée de courant (E113) du deuxième spire du conducteur supérieur de X (C112), l'extrémité de sortie de courant (E114) du deuxième spire du conducteur supérieur de X (C112) est mise en conduction avec l'extrémité d'entrée de courant (E213) du deuxième spire du conducteur inférieur de X (C122), l'extrémité de sortie de courant (E214) de la deuxième spire du conducteur inférieur de X (C122) est mise en conduction avec le point d'entrée de courant (D12) de la structure à double couche suivante, dans laquelle le point d'entrée de courant (D12) de la structure supérieure à double couche est le point d'entrée de courant de l'ensemble de la bobine de X.

7. Dispositif de déplacement par moteur planaire (1) selon l'une quelconque des revendications 1 à 3, **caractérisé en ce que**
la structure inférieure à double couche de la bobine de X (L111) comprend au moins une première spire du conducteur supérieur de X (C111), une deuxième spire du conducteur supérieur de X (C112) et une première spire du conducteur inférieur de X (C121),
la première spire du conducteur supérieur de X (C111) et la deuxième spire du conducteur supérieur de X (C112) sont respectivement en forme de U à angle droit, et la première spire du conducteur supérieur de X (C111) est disposée à l'extérieur de la deuxième spire du conducteur supérieur de X (C112),
la première spire du conducteur inférieur de X (C121) est rectiligne, et les projections de la première spire du conducteur supérieur de X (C111) et de la première spire du conducteur inférieur de X (C121) sur un plan X-Y sont sensiblement rectangulaires,
une extrémité d'entrée de courant (E119) de la première spire du conducteur supérieur de X (C111) est mise en conduction avec un point d'entrée de courant (D13) de la structure à double couche, une extrémité de sortie de courant (E120) de la première spire du conducteur supérieur de X (C111) est mise en conduction avec l'extrémité d'entrée de courant (E219) de la première spire du conducteur inférieur de X (C121), l'extrémité de sortie de courant (E220) de la première spire du conducteur inférieur de X (C121) est mise en conduction avec l'extrémité d'entrée de courant (E121) du deuxième spire du conducteur supérieur de X (C112), l'extrémité de sortie de courant (E122) du deuxième spire du conducteur supérieur de X (C112) est mise en conduction avec un point de sortie de courant (D11) de l'ensemble de la bobine de X.

8. Dispositif de déplacement par moteur planaire (1) selon l'une quelconque des revendications 1 à 3, **caractérisé en ce que**
la structure supérieure à double couche ou la structure intermédiaire à double couche de la bobine de Y comprend au moins un conducteur supérieur de drain (C210), une première spire du conducteur supérieur de Y (C211), une deuxième spire du conducteur supérieur de Y (C212), un conducteur inférieur de drain (C220), une première spire du conducteur inférieur de Y (C221) et une deuxième spire du conducteur inférieur de Y (C222),
le conducteur supérieur de drain (C210), le conducteur inférieur de drain (C220), la première spire du conducteur supérieur de Y (C211) et la deuxième spire du conducteur supérieur de Y (C212) sont respectivement rectilignes, et la première spire du conducteur supérieur de Y (C211) est disposé à l'intérieur du deuxième spire du conducteur supérieur de Y (C212),
le premier spire du conducteur inférieur de Y (C221) et le deuxième spire du conducteur inférieur de Y (C222) sont respectivement en forme de U à angle droit, et le premier spire du conducteur inférieur de Y (C221) est disposé à l'extérieur du deuxième spire du conducteur inférieur de Y (C222),
les projections du conducteur supérieur de drain (C210), du premier spire du conducteur supérieur de Y (C211) et du premier spire du conducteur inférieur de Y (C221) sur un plan X-Y sont sensiblement rectangulaires, et les projections du deuxième spire du conducteur supérieur de Y (C212) et du deuxième spire du conducteur inférieur de Y (C222) sur le plan X-Y sont sensiblement rectangulaires,
une extrémité (E311) du conducteur supérieur de drain (C210) est connectée à un point d'entrée de courant (D20) de la structure à double couche, l'autre extrémité (E312) du conducteur supérieur de drain (C210) est mise en conduction avec une extrémité d'entrée de courant (E411) de la première spire du conducteur inférieur de Y (C221), une extrémité de sortie de courant (E412) de la première spire du conducteur inférieur de Y (C221) est mise en conduction avec l'extrémité d'entrée de courant (E313) de la première spire du conducteur supérieur de Y (C211), l'extrémité de sortie de courant (E314) du premier spire du conducteur supérieur de Y (C211) est mise en conduction avec l'extrémité d'entrée de courant (E413) du deuxième spire du conducteur inférieur de Y (C222), l'extrémité de sortie de courant (E414) de la deuxième spire du conducteur inférieur de Y (C222) est mise en conduction avec l'extrémité d'entrée de courant (E315) de la deuxième spire du conducteur supérieur de Y (C212), l'extrémité de sortie de courant (E316) de la deuxième spire du conducteur supérieur de Y (C212) est mise en conduction avec l'extrémité d'entrée de courant (E415) du conducteur inférieur de drain (C220), et l'extrémité de sortie de courant (E416) du conducteur inférieur de drain (C220) est mise en conduction avec l'extrémité d'entrée de courant (D22) de la structure à double couche suivante, dans laquelle le point d'entrée de courant de la structure supérieure à double couche est le point d'entrée de courant de l'ensemble de la bobine de Y.

9. Dispositif de déplacement par moteur planaire (1) selon l'une quelconque des revendications 1 à 3, **caractérisé en ce que**
la structure inférieure à double couche de la bobine de Y comprend au moins un conducteur supérieur de drain (C210), une première spire du conducteur supérieur de Y (C211), une première spire du conducteur inférieur de Y (C221) et une deuxième spire du conducteur inférieur de Y (C222),
le conducteur supérieur de drain (C210) et la première spire du conducteur supérieur de Y (C211) sont respectivement rectilignes,
la première spire du conducteur inférieur de Y (C221) et la deuxième spire du conducteur inférieur de Y (C222) sont respectivement en forme de U à angle droit, et la première spire du conducteur inférieur de Y (C221) est disposée à l'extérieur de la deuxième spire du conducteur inférieur de Y (C222),
les projections du conducteur supérieur de drain (C210), du premier spire du conducteur supérieur de Y (C211) et du premier spire du conducteur inférieur de Y (C221) sur un plan X-Y sont sensiblement rectangulaires,
une extrémité (E323) du conducteur supérieur de drain (C210) est connectée à un point d'entrée de courant (D23) de la structure à double couche, l'autre extrémité (E324) du conducteur supérieur de drain (C210) est mise en conduction avec une extrémité d'entrée de courant (E423) de la première spire du conducteur inférieur de Y (C221), une extrémité de sortie de courant (E424) de la première spire du conducteur inférieur de Y (C221) est mise en conduction avec l'extrémité d'entrée de courant (E325) de la première spire du conducteur supérieur de Y (C211), l'extrémité de sortie de courant (E326) de la première spire du conducteur supérieur de Y (C211) est mise en conduction avec l'extrémité d'entrée de courant (E425) de la deuxième spire du conducteur inférieur de Y (C222), l'extrémité de sortie de courant (E426) de la deuxième spire du conducteur inférieur de Y (C222) est mise en conduction avec un point de sortie de courant (D21) de l'ensemble de la bobine de Y.

10. Dispositif de déplacement par moteur planaire (1) selon la revendication 9, **caractérisé en ce que**
les conducteurs dans différentes couches conductrices du réseau de bobines (A21) sont connectés électriquement par des vias dans une carte de circuit imprimé,
le point de sortie de courant de la bobine est un trou traversant dans la carte de circuit imprimé, ledit trou pénétrant dans la structure supérieure à double couche de la bobine jusqu'à la structure inférieure à double couche.
